# EUROPÄISCHE PATENTSCHRIFT

(11) **EP 3 153 307 B1**
(45) Veröffentlichungstag und Bekanntmachung des Hinweises auf die Patenterteilung: **02.12.2020**
(21) Anmeldenummer: 15188309.7
(22) Anmeldetag: 05.10.2015
(51) Int. Cl.: B29C 64/106, B29C 70/30, B29B 11/16, B33Y 70/00

(54) **SCHICHTWEISES AUFBAUEN EINES FASERKÖRPERS**
GENERATING A FIBRE COMPOUND BY LAYERS
MONTAGE PAR COUCHE D'UN CORPS FIBREUX

(43) Veröffentlichungstag der Anmeldung: 12.04.2017
(73) Patentinhaber: Airbus Defence and Space GmbH, 85521 Ottobrunn (DE)
(72) Erfinder: Weimer, Christian, 81539 München (DE); Engel, Franz, 81539 München (DE)
(74) Vertreter: Isarpatent

(56) Entgegenhaltungen:
- EP-A1- 2 727 693
- WO-A1-2015/120429
- WO-A2-2005/030462

## Beschreibung

Die vorliegende Erfindung betrifft ein Verfahren zur Herstellung eines Faserkörpers, ein Verfahren zur Herstellung eines Faser-Matrix-Halbzeugs, eine Vorrichtung zur Herstellung eines Faserkörpers und einen Faserkörper.

Die Herstellung von Faser-Kunststoffverbundbauteilen basiert nach dem Stand der Technik auf einer Nutzung von textiltechnisch produzierten Verstärkungshalbzeugen. Hierzu müssen zunächst Fasern hergestellt und zu einem textilen Zwischenprodukt wie beispielsweise einem Gewebe, Gelege oder Vlies weiterverarbeitet werden. Ein derartiges Vorgehen bedeutet sowohl hinsichtlich seiner Durchführung als auch angesichts der benötigten Vorrichtungen einen hohen Aufwand.

In der Druckschrift US 6934600 B2 ist ein Verfahren zur Herstellung von faserverstärktem Verbundmaterial offenbart, demzufolge eine flüssige Mischung von Nanoröhrchen zu einer Faser gespritzt wird. Mehrere Abschnitte dieser Faser werden ausgerichtet und ggf. einer textilen Operation wie z.B. einem Weben oder Flechten unterzogen, ehe sie zu einem Vorformling geschmolzen, gepresst und ausgehärtet werden. EP-A-2727693 offenbart ein Verfahren zum Herstellen eines Faserkörpers, dass ein schichtweises Aufbauen des Faserkörpers durch alternierendes Aufbringen eines Faser-Matrix-Materials auf eine jeweilige Schichtgrundlage umfasst und wobei das Faser-Matrix-Material ein Matrixmaterial und eine Mehrzahl an Kurzfasern und/oder Faserpartikeln enthält. Am Ende dieses Verfahrens kann der Faserkörper unter Hitze kompaktiert werden.

Ein Nachteil eines derartigen Vorgehens ist die aufwendige Handhabung der Faserabschnitte. Zudem
müssen die Faserabschnitte einer gewünschten Form eines herzustellenden Verbundmaterials entsprechend positioniert werden, sofern nicht ein mit Materialverlust einhergehender Zuschnitt erfolgt.

In der Druckschrift US 2014/ 0361460 A1 ist ein Verfahren zur generativen Fertigung eines Bauteils offenbart, bei dem ein faserverstärkter Verbundstofffaden mit einem axialen Faserstrang in einem Matrixmaterial abgegeben und geschmolzen wird. Auch in diesem Falle ist somit eine endloser Faserstrang zu führen, woraus ein entsprechende Aufwand sowie eine geringe Ablegegeschwindigkeit resultieren.

Der vorliegenden Erfindung liegt die Aufgabe zugrunde, eine alternative Technik bereitzustellen, mittels der die vorgenannten Nachteile vermieden werden können.

Die Aufgabe wird gelöst durch ein Verfahren gemäß Anspruch 1, eine Vorrichtung gemäß Anspruch 13 und einen Faserkörper gemäß Anspruch 14. Vorteilhafte Ausführungsformen werden in den Unteransprüchen, der Beschreibung und der Figur offenbart.

Ein erfindungsgemäßes Verfahren dient einem Herstellen eines Faserkörpers. Es umfasst ein schichtweises Aufbauen des Faserkörpers, indem alternierend ein Faser-Matrix-Material auf eine jeweilige Schichtgrundlage aufgebracht und eine jeweils aufgebrachte Schicht des Faser-Matrix-Materials an der jeweiligen Schichtgrundlage angeschmolzen wird. Das Faser-Matrix-Material enthält ein Matrixmaterial und eine Mehrzahl an Kurzfasern und/oder Faserpartikeln (z.B. ein Granulat aus Fasermaterial). Der Faserkörper weist dabei eine Mehrzahl an (vorzugsweise fluiddurchlässig) miteinander vernetzten Strukturen auf (die Schichten werden also so aufgebracht, dass eine derartige Mehrzahl an vernetzten Strukturen entsteht). Der Faserkörper kann beispielsweise so beschaffen sein, dass Stränge des schichtweise aufgebrachten Faser-Matrix-Materials gewebe-, gelege- oder vliesartig relativ zueinander angeordnet sind.

Der Begriff "Faser" verweist in dieser Schrift einerseits auf einen strukturellen und funktionalen Aufbau des Faserkörpers, der aus einer Mehrzahl von vernetzten Strukturen gebildet wird und wie ein Fasergewebe oder -vlies gemäß einer herkömmlichen Herstellung von Faserverbundstoffen oder Faser-Matrix-Halbzeugen weiterverwendet werden kann. Andererseits bezieht sich der besagte Begriff "Faser" auf einen Bestandteil des Druckmaterials (und damit auch des Faserkörpers), nämlich auf Kurzfasern und/oder Faserpartikel in dem Faser-Matrix-Material.

Ein gemäß einem erfindungsgemäßen Verfahren hergestellter Faserkörper dient als Ausgangsmaterial für ein Faser-Matrix-Halbzeug und/oder ein Verbundstoffbauteil, indem er mit weiterem Matrixmaterial infiltriert werden kann; dieses weitere Matrixmaterial kann das gleiche wie das in der Faser-Matrix-Material enthaltene oder ein davon verschiedenes sein. Insbesondere wenn die Strukturen des Faserkörpers fluiddurchlässig miteinander vernetzt sind, kann das weitere Matrixmaterial in den Faserkörper eindringen, diesen somit imprägnieren, und darin aushärten.

Die jeweilige Schichtgrundlage kann beispielsweise eine zuvor aufgebrachte Schicht sein oder umfassen; in diesem Falle umfasst das Anschmelzen vorzugsweise ein Anschweißen der aufgebrachten Schicht an der Schichtgrundlage, so dass beide miteinander verbunden werden. In anderen Situationen kann die Schichtgrundlage eine Unterlage (beispielsweise eine Platte) oder eine Haltematerie (z.B. eine gespannter Strang, insbesondere eine Faser, z.B. aus Kohlenstoff) umfassen, die nach einem Aushärten am oder im Faserkörper verbleiben kann oder von diesem ablösbar sein kann.

Ein erfindungsgemäßer Faserkörper weist eine Mehrzahl an (vorzugsweise fluiddurchlässig) miteinander vernetzten Strukturen auf und ist aus einem Faser-Matrix-Material schichtweise hergestellt, vorzugsweise mittels eines erfindungsgemäßen Verfahrens in einer der in dieser Schrift offenbarten Ausführungsformen.

Eine erfindungsgemäße Vorrichtung ist dazu eingerichtet, ein erfindungsgemäßes Verfahren gemäß einer der in dieser Schrift offenbarten Ausführungsformen (vorzugsweise mindestens teilweise automatisch) auszuführen, insbesondere einen Faserkörper mit einer Mehrzahl an (vorzugsweise fluiddurchlässig) miteinander vernetzten Strukturen herzustellen. Sie umfasst Mittel zum Aufbringen von Schichten eines Faser-Matrix-Materials, das ein Matrixmaterial und eine Mehrzahl an Kurzfasern und/oder Faserpartikeln enthält, auf eine jeweilige Schichtgrundlage sowie Mittel zum Anschmelzen einer jeweils aufgebrachten Schicht der Faser-Matrix-Material an der Schichtgrundlage. Vorzugsweise umfasst eine derartige Vorrichtung zudem eine Rechnereinheit zur automatischen Steuerung und/oder Regelung der Mittel zum Aufbringen und der Mittel zum Anschmelzen.

Mit der vorliegenden Erfindung kann auf einfache und schnelle Weise ein Faserkörper hergestellt werden, der sich für eine Verwendung zur Herstellung eines Faser-Matrix-Halbzeugs und/oder Verbundstoffbauteils eignet. Dabei wird Verschnitt von textilem Halbzeug vermieden, und die Qualität des hergestellten Faserkörpers ist durch eine Kontrolle des Schichtdrucks und des Anschmelzens sehr gut bereits während der Herstellung kontrollierbar.

Das Anschmelzen kann vorzugsweise ein Verfestigen (bzw. abkühlen-Lassen) und/oder Anpressen der jeweiligen Schicht in dem lokalen Bereich umfassen.

Gemäß einer vorteilhaften Ausführungsvariante erfolgt das Aufbringen des Faser-Matrix-Materials durch eine Mikrodüse (bzw. umfassen die Mittel zum Aufbringen eine derartige Mikrodüse). Damit können auf einfache und schnelle Weise filigrane vernetzte Strukturen des Faserkörpers erzeugt werden. Insbesondere kann damit eine entsprechend gute Fluiddurchlässigkeit der vernetzten Strukturen des Faserkörpers bewirkt werden.

Die Kurzfasern (die vorzugsweise eine Länge von 0,1 mm - 1 mm haben) und/oder Faserpartikel werden vorzugsweise beim Aufbringen auf die jeweilige Schichtgrundlage parallel zueinander ausgerichtet, beispielsweise durch ein Einstellen einer Ausgabegeschwindigkeit des Faser-Matrix-Materials aus einer Ausgabevorrichtung wie beispielsweise einer Mikrodüse: Eine derartige Geschwindigkeit kann in Kombination mit Anhaftungskräften an der Ausgabevorrichtung (z.B. an deren Innenwänden) eine geeignete Scherung der Kurzfasern und/oder Faserpartikel hervorrufen, die eine Ausrichtung der Kurzfasern und/oder Faserpartikel in Ausgaberichtung bewirkt. Die Ausgabegeschwindigkeit kann dabei in Abhängigkeit von Parametern des Faser-Matrix-Materials (z.B. dem darin enthaltenen Matrixmaterial, den enthaltenen Kurzfasern bzw. Faserpartikeln (insbesondere deren Material und/oder Länge bzw. Größe) und/oder einer dessen Prozesstemperatur der Faser-Matrix-Materials) aus einer Datenbank ausgelesen und eingestellt werden.

Das in dem Faser-Matrix-Material enthaltene Matrixmaterial kann ein Thermoplast, insbesondere ein thermoplastisches Polymer sein oder umfassen. Ein derartiges Material ermöglicht über eine Temperaturregelung eine Einstellung einer günstigen Scherrate für die Kurzfasern und/oder Faserpartikel und damit deren vorteilhafte Ausrichtung.

Das Faser-Matrix-Material kann als Mischung aufgebracht werden. Eine derartige Mischung ist vorzugsweise beim Aufbringen flüssig oder viskos. Alternativ oder zusätzlich kann das Faser-Matrix-Material mindestens teilweise nach Matrixmaterial und Kurzfasern bzw. Faserpartikeln getrennt aufgebracht werden, z.B. nacheinander Matrixmaterial und Kurzfasern bzw. Faserpartikel. Insbesondere kann das Aufbringen des Faser-Matrix-Materials ein Aufblasen des Matrixmaterials und/oder der Kurzfasern bzw. Faserpartikeln und/oder eines Gemisches aus beiden auf die jeweilige Schichtgrundlage umfassen. Diese Ausführungsform erlaubt insbesondere auf einfache Weise ein Generieren lokaler Unterschiedlichkeiten des aufgebrachten Faser-Matrix-Materials. Die Mittel zum Aufbringen des Faser-Matrix-Materials einer erfindungsgemäßen Vorrichtung können dementsprechend ein Gebläse für das Matrixmaterial und/oder der Kurzfasern bzw. Faserpartikeln und/oder eines Gemisches umfassen.

Gemäß einer Ausführungsform eines erfindungsgemäßen Verfahrens umfasst das Aufbringen ein flächiges Überspülen der Schichtgrundlage mit dem (vorzugsweise flüssigen oder viskosen) Faser-Matrix-Material, das jeweils gezielt lokal (also in mindestens einem vorgesehenen Bereich, der Teil des für den herzustellenden Faserkörper werden soll) angeschmolzen wird. Das Faser-Matrix-Material kann dabei als Gemisch vorliegen und vorzugsweise in Bewegung gehalten (z.B. regelmäßig oder kontinuierlich gerührt) werden. Dadurch kann ein gleichmäßiger Ausgangsstoff für das Drucken erzeugt werden. Die Mittel zum Aufbringen des Faser-Matrix-Materials einer erfindungsgemäßen Vorrichtung können dementsprechend eine Plattform oder einen Behälter für Faser-Matrix-Material umfassen, auf bzw. in dem der in der Herstellung begriffene Faserkörper von Faser-Matrix-Material überspült werden kann. Die genannten Mittel können in diesem Fall weiterhin einen Verstellmechanismus zum vertikalen Verstellen einer Position der Plattform bzw. des Behälters bei bestimmungsgemäßem Gebrauch umfassen.

Gemäß einer vorteilhaften Ausführungsform eines erfindungsgemäßen Verfahrens umfasst das Aufbringen von Faser-Matrix-Material auf die Schichtgrundlage ein Umspülen von Haltematerie mit flüssigem und/oder viskosem Faser-Matrix-Material. Eine derartige Haltematerie kann insbesondere mindestens eine vertikal gespannte Faser umfassen. Dadurch können die mechanischen Eigenschaften des herzustellenden Faserkörpers in vertikaler Richtung verbessert werden, insbesondere seine Zugfestigkeit. Die Mittel zum Aufbringen des Faser-Matrix-Materials einer erfindungsgemäßen Vorrichtung können dementsprechend eine Fixiervorrichtung (z.B. eine Spannvorrichtung) für die Haltematerie umfassen sowie vorzugsweise ein Behältnis für das Faser-Matrix-Material, das dazu eingerichtet ist, eine mit der Fixiervorrichtung fixierte Haltematerie mindestens bereichsweise mit dem Faser-Matrix-Material zu umgeben. Vorteilhaft ist eine Ausführungsform, die eine Einrichtung zum Ändern einer Position des Behältnisses gegenüber der Haltematerie aufweist, beispielsweise einen Lift. Damit kann die Haltematerie an verschiedenen Stellen umspült und damit mit dem Faser-Matrix-Material beschichtet werden.

Besonders vorteilhaft ist eine Ausführungsform eines erfindungsgemäßen Verfahrens, die ein Wechseln des Faser-Matrix-Materials während des alternierenden Aufbringens und Anschmelzens von Schichten umfasst. Beispielsweise kann das alternierende Aufbringen und Anschmelzen von Schichten ein Aufbringen eines ersten Faser-Matrix-Materials (das z.B. ein erstes Matrixmaterial und eine erste Kurzfaser- und/oder Partikeldichte enthält) sowie ein Aufbringen eines von dem ersten verschiedenen zweiten Faser-Matrix-Materials umfassen (die z.B. ein anderes Matrixmaterial und/oder eine andere Kurzfaser- und/oder Partikeldichte und/oder Kurzfaserlänge bzw. Partikelgröße enthält).

Somit kann auf einfache Weise ein Faserkörper entsprechend dem jeweiligen Verwendungszweck hergestellt werden. Insbesondere kann ein derart hergestellter Faserkörper (und/oder ein daraus gefertigtes Bauteil) Bereiche unterschiedlicher Festigkeit und/oder Leitfähigkeit aufweisen.

Gemäß einer bevorzugten Ausführungsform eines erfindungsgemäßen Verfahrens umfasst das Anschmelzen der jeweiligen Schicht von Faser-Matrix-Material ein Erwärmen durch mindestens eine Wärmequelle; diese schweißt vorzugsweise das Faser-Matrix-Material lokal an den Verlegungsuntergrund an. Die von einer erfindungsgemäßen Vorrichtung umfassten Mittel zum Aufbringen können demgemäß vorzugsweise mindestens eine Wärmequelle einschließen. Vorteilhaft ist eine Ausführungsform, bei der die mindestens eine Wärmequelle beweglich ist und/oder in ihrer Leistung regelbar. Insbesondere weisen die besagten Mittel vorzugsweise eine Regelungseinheit sowie eine damit verbundene Temperatur-Messvorrichtung auf, die dazu eingerichtet ist, eine aufgebrachte Wärme und/oder eine Temperatur der mindestens einen Wärmequelle zu erfassen.

Besonders bevorzugt ist eine Ausführungsform, bei der zum Anschmelzen zwei oder mehr Wärmequellen (mindestens zeitweise gleichzeitig) einen Überlappungsbereich auf einer aufgebrachten Schicht bestrahlen. Vorzugsweise erreichen dabei die Wärmequellen nur zusammen und in dem Überlappungsbereich eine für das Anschmelzen benötigte Temperatur. Dadurch kann ein Anschmelzen gezielt in dem Überlappungsbereich erfolgen, während in einem Strahlengang jeder einzelnen der Wärmequellen (im Wesentlichen) aufgrund zu niedriger Temperatur kein Anschmelzen von Material stattfindet. Damit kann das Anschmelzen auch unterhalb einer Oberfläche des Faser-Matrix-Materials erfolgen. Die von einer erfindungsgemäßen Vorrichtung umfassten Mittel zum Anschmelzen können demgemäß analog mindestens zwei entsprechend auf einen Überlappungsbereich ausgerichtete Wärmequellen umfassen.

Gemäß einer vorteilhaften Ausführungsform umfasst das Anschmelzen einen gezielten Einsatz von Heißgas und/oder Licht, beispielsweise von mindestens einer Laserquelle, Infrarotquelle und/oder Leuchtdiode. Die von einer erfindungsgemäßen Vorrichtung umfassten Mittel zum Anschmelzen können demgemäß analog eine Heißgasquelle oder mehrerer derartige Lichtquellen einschließen.

Gemäß einer vorteilhaften Ausführungsform umfasst das Anschmelzen ein Erwärmen durch ein Anschließen eines leitfähigen Teils des herzustellenden Faserkörpers an eine Stromquelle. Insbesondere kann die Schichtgrundlage ein elektrisch leitfähiges Material (z.B. Kohlenstofffasern) umfassen und kann das Anschmelzen ein Anschließen mindestens eines Teils der Schichtgrundlage an eine Stromquelle umfassen. Durch einen entsprechenden Stromfluss kann die Schichtgrundlage erhitzt und dadurch eine anliegende Schicht Faser-Matrix-Material angeschmolzen werden. Die von einer erfindungsgemäßen Vorrichtung umfassten Mittel zum Anschmelzen können demgemäß analog Elektroden umfassen, die dazu eingerichtet sind, an einen leitfähigen Teil des herzustellenden Faserkörpers angeschlossen zu werden.

Derartige Ausführungsformen bieten eine einfache Möglichkeit, auch sehr dünnwandige Faserkörper (und daraus entsprechende Bauteile) mit einem sehr hohen Faservolumengehalt aufzubauen. Darüber hinaus kann die Faser-Matrix-Material-Schicht gezielt erwärmt werden, ohne dass eine Wärmequelle durch eine aufwendige Vorrichtung geeignet fokussiert werden muss.

Eine an einer derart durch elektrischen Stromfluss erwärmten Schichtgrundlage anliegende Schicht kann durch ein Aufsprühen des Faser-Matrix-Materials und/oder ein Eintauchen der erwärmten Schichtgrundlage in das Faser-Matrix-Material erzeugt werden. Damit kann ein besonders schnelles Anschmelzen bewirkt werden.

Ein gemäß einem erfindungsgemäßen Verfahren und in einer gewünschten geometrischen Form erzeugter Faserkörper kann mit einem duroplastischen und/oder einer thermoplastischen Matrixmaterial (das ein anderes oder das gleiche sein kann wie das in dem Faser-Matrix-Material enthaltene) infiltriert werden. Damit kann auf vorteilhafte Weise ein Faser-Matrix-Halbzeug, insbesondere ein vorimprägniertes Verbundstoffhalbzeug hergestellt werden.

Aus einem derart vorteilhaft hergestellten Faser-Matrix-Halbzeug kann ein Bauteil hergestellt werden; die Herstellung kann ein Aushärten des Faser-Matrix-Halbzeugs mittels Heißpresstechnik und/oder in einem Autoklaven umfassen.

Im Folgenden werden bevorzugte Ausführungsbeispiele der Erfindung anhand einer Zeichnung näher erläutert. Es versteht sich, dass die schematisch dargestellten einzelnen Elemente und Komponenten auch anders kombiniert und/oder ausgebildet sein können als gezeigt und dass das erfindungsgemäße Verfahren nicht auf die gezeigte Ausführungsvariante beschränkt ist.

Es zeigt schematisch:

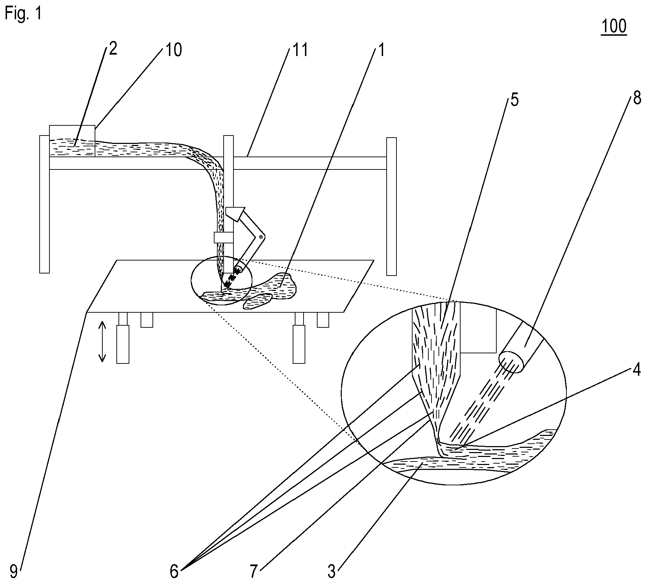

Figur 1: eine exemplarische erfindungsgemäße Vorrichtung zur Herstellung eines Faserkörpers

In Figur 1 ist exemplarisch eine Vorrichtung 100 gemäß einer Ausführungsform der vorliegenden Erfindung dargestellt, die dazu eingerichtet (also geeignet ist), gemäß einem erfindungsgemäßen Verfahren einer Ausführungsform einen Faserkörper 1 herzustellen; in einer Detaildarstellung im Kreis werden dabei Einzelheiten der Verfahrensdurchführung gezeigt.

Die Vorrichtung 100 umfasst ein Portalsystem 11, mit dem eine Mikrodüse 7 über einem höhenverstellbaren Tisch 9 bewegt werden kann, um darauf schichtweise ein Faser-Matrix-Material 2 zu Herstellung des Faserkörpers 1 zu positionieren; das Faser-Matrix-Material wird dabei von einem Behälter 10 zur Mikrodüse 7 geleitet. Das Portalsystem 11 und der höhenverstellbare Tisch 9 werden vorzugsweise automatisch von mindestens einer (nicht gezeigten) Rechnereinheit gesteuert. Wie die Mikrodüse 7 ist auch eine Wärmequelle 8 an einem Arm des Portalsystems angeordnet.

Die Wärmequelle 8 ist dazu eingerichtet, eine jeweils aufgebrachte Schicht 4 des Faser-Matrix-Materials zu erwärmen und unmittelbar nach Aufbringung der Schicht 4 jeweils lokal an der Schichtgrundlage anzuschweißen, ehe ggf. eine weitere Schicht aufgetragen wird. Vorzugsweise ist die Wärmequelle 8 in ihrer Ausrichtung steuerbar, so dass sie gezielt auf einen anzuschweißenden Bereich gerichtet werden kann.

Vorteilhaft ist eine Ausführungsform, die eine (nicht gezeigte) Temperatur-Messvorrichtung zum Erfassen einer Temperatur der Wärmequelle und/oder einer aufgebrachten Wärme umfasst und bei der eine Leistung der Wärmequelle auf Grundlage einer durch die Temperatur-Messvorrichtung erfassten Temperatur automatisch regelbar ist.

Das Faser-Matrix-Material 2 enthält ein Matrixmaterial 5 (z.B. ein Polymer) und eine Mehrzahl an Kurzfasern 6 (z.B. Kohlenstoff- und/oder Glasfaserstücke), die vorzugsweise eine Länge von 0,1 mm - 1 mm haben. In der dargestellten Situation wird eine Schicht 4 auf eine Schichtgrundlage 3 aufgebracht, die vorliegend eine früher aufgebrachte Schicht des Faser-Matrix-Materials ist.

### Bezugszeichen

- 1: Faserkörper
- 2: Faser-Matrix-Material
- 3: Schichtgrundlage
- 4: aufgebrachte Schicht
- 5: Matrixmaterial
- 6: Kurzfasern
- 7: Mikrodüse
- 8: Wärmequelle
- 9: verstellbarer Tisch
- 10: Behälter für Faser-Matrix-Material
- 11: Portalsystem

- 100: Vorrichtung zur Herstellung eines Faserkörpers

## Patentansprüche

1. Verfahren zum Herstellen eines Faserkörpers, das ein schichtweises Aufbauen des Faserkörpers (1) durch alternierendes Aufbringen eines Faser-Matrix-Materials (2) auf eine jeweilige Schichtgrundlage (3) und Anschmelzen einer jeweils aufgebrachten Schicht (4) des Faser-Matrix-Materials an der Schichtgrundlage (3) umfasst,
wobei der Faserkörper eine Mehrzahl miteinander vernetzten Strukturen aufweist und wobei das Faser-Matrix-Material ein Matrixmaterial (5) und eine Mehrzahl an Kurzfasern (6) und/oder Faserpartikeln enthält.

2. Verfahren gemäß Anspruch 1, wobei das Aufbringen des Faser-Matrix-Materials durch eine Mikrodüse (7) erfolgt und/oder wobei das Faser-Matrix-Material ein Thermoplast, insbesondere ein Polymer ist oder umfasst.

3. Verfahren gemäß Anspruch 1 oder 2, wobei das Aufbringen des das Faser-Matrix-Materials ein Aufblasen des Matrixmaterials und/oder der Kurzfasern (6) bzw. Faserpartikeln auf die jeweilige Schichtgrundlage umfasst.

4. Verfahren gemäß einem der vorhergehenden Ansprüche, wobei das Aufbringen ein flächiges Überspülen der Schichtgrundlage mit dem Faser-Matrix-Materials umfasst, das gezielt lokal verfestigt wird.

5. Verfahren gemäß einem der vorhergehenden Ansprüche, wobei das Aufbringen ein Umspülen von Haltematerie, insbesondere von mindestens einer vertikal gespannten Faser mit dem Faser-Matrix-Materials umfasst.

6. Verfahren gemäß einem der vorhergehenden Ansprüche, das ein Wechseln des Faser-Matrix-Materials während des alternierenden Aufbringens und Anschmelzens von Schichten umfasst.

7. Verfahren gemäß einem der vorhergehenden Ansprüche, wobei das Anschmelzen ein Erwärmen durch eine, zwei oder mehr Wärmequellen (8) umfasst.

8. Verfahren gemäß einem der vorhergehenden Ansprüche, wobei das Anschmelzen mittels Licht und/oder Heißgas erfolgt.

9. Verfahren gemäß einem der vorhergehenden Ansprüche, wobei die Schichtgrundlage (3) ein elektrisch leitfähiges Material umfasst und wobei das Anschmelzen ein Anschließen mindestens eines Teils der Schichtgrundlage an eine Stromquelle umfasst.

10. Verfahren gemäß Anspruch 9 , wobei das Aufbringen des Faser-Matrix-Materials ein Aufsprühen desselben auf die durch Stromdurchfluss erwärmte Schichtgrundlage und/oder ein Eintauchen mindestens eines Teils der durch Stromdurchfluss erwärmten Schichtgrundlage in das Faser-Matrix-Material umfassen.

11. Verfahren zum Herstellen eines Faser-Matrix-Halbzeugs, das ein Herstellen eines Faserkörpers gemäß einem der vorhergehenden Ansprüche sowie ein Infiltrieren des Faserkörpers mit einer duroplastischen und/oder einer thermoplastischen Matrix umfasst.

12. Verfahren zum Herstellen eines Bauteils, das ein Herstellen eines Faserkörpers gemäß einem der Ansprüche 1 bis 10 sowie ein Infiltrieren des Faserkörpers mit einer duroplastischen und/oder einer thermoplastischen Matrix sowie ein Aushärten des infiltrierten Faserkörpers mittels Heißpresstechnik und/oder in einem Autoklaven umfasst.

13. Vorrichtung (100) zur Herstellung eines Faserkörpers (1), die aufweist:
Mittel zum Aufbringen von Schichten eines Faser-Matrix-Materials, das ein Matrixmaterial (5) und eine Mehrzahl an Kurzfasern (6) und/oder Faserpartikeln enthält, auf eine jeweilige Schichtgrundlage, und
Mittel zum Anschmelzen einer jeweils aufgebrachten Schicht der Faser-Matrix-Material an der Schichtgrundlage;
wobei die Vorrichtung dazu eingerichtet ist, ein Verfahren gemäß einem der vorhergehenden Ansprüche auszuführen.

14. Faserkörper (1) mit einer Mehrzahl an miteinander vernetzten Strukturen, wobei der Faserkörper aus einem Faser-Matrix-Material (2) schichtweise hergestellt ist, das ein Matrixmaterial (5) und eine Mehrzahl an Kurzfasern (6) und/oder Faserpartikeln enthält.

15. Faserkörper (1) nach Anspruch 14, wobei die Kurzfasern (6) eine Länge von 0,1 mm bis 1 mm haben.

## Claims

1. Method for producing a fibre body, which comprises building up the fibre body (1) layer by layer by alternately applying a fibre matrix material (2) to a respective layer base (3) and fusing a respectively applied layer (4) of the fibre matrix material onto the layer base (3), wherein the fibre body has a plurality of structures which are crosslinked with one another, and wherein the fibre matrix material contains a matrix material (5) and a plurality of short fibres (6) and/or fibre particles.

2. Method according to Claim 1, wherein the fibre matrix material is applied by a micronozzle (7), and/or wherein the fibre matrix material is or comprises a thermoplastic, in particular a polymer.

3. Method according to Claim 1 or 2, wherein the application of the fibre matrix material comprises blowing the matrix material and/or the short fibres (6) or fibre particles onto the respective layer base.

4. Method according to one of the preceding claims, wherein the application comprises washing-over the layer base over its surface area with the fibre matrix material, which is solidified locally in a targeted manner.

5. Method according to one of the preceding claims, wherein the application comprises a washing-around of holding material, in particular of at least one vertically stretched fibre, with the fibre matrix material.

6. Method according to one of the preceding claims, which comprises an exchange of the fibre matrix material during the alternating application and fusing of layers.

7. Method according to one of the preceding claims, wherein the fusing comprises heating by one, two or more heat sources (8).

8. Method according to one of the preceding claims, wherein the fusing takes place by means of light and/or hot gas.

9. Method according to one of the preceding claims, wherein the layer base (3) comprises an electrically conductive material, and wherein the fusing comprises connection of at least part of the layer base to a current source.

10. Method according to Claim 9, wherein the application of the fibre matrix material comprises spraying it onto the layer base, which has been heated by a throughflow of current, and/or immersing at least part of the layer base, which has been heated by a throughflow of current, into the fibre matrix material.

11. Method for producing a fibre matrix semifinished product, which comprises producing a fibre body according to one of the preceding claims and infiltrating the fibre body with a thermosetting and/or a thermoplastic matrix.

12. Method for producing a component, which comprises producing a fibre body according to one of Claims 1 to 10, infiltrating the fibre body with a thermosetting and/or thermoplastic matrix, and hardening the infiltrated fibre body by means of hot pressing technology and/or in an autoclave.

13. Apparatus (100) for producing a fibre body (1), which apparatus has:
means for applying layers of a fibre matrix material which contains a matrix material (5) and a plurality of short fibres (6) and/or fibre particles to a respective layer base, and
means for fusing a respectively applied layer of the fibre matrix material onto the layer base;
wherein the apparatus is configured to carry out a method according to one of the preceding claims.

14. Fibre body (1) with a plurality of structures which are crosslinked to one another, wherein the fibre body is produced layer by layer from a fibre matrix material (2) which contains a matrix material (5) and a plurality of short fibres (6) and/or fibre particles.

15. Fibre body (1) according to Claim 14, wherein the short fibres (6) have a length of 0.1 mm to 1 mm.

## Revendications

1. Procédé pour la fabrication d'un corps fibreux, qui comprend une construction par couches du corps fibreux (1) par application en alternance d'un matériau à base de fibres-matrice (2) sur une base de couche respective (3) et par fusion d'une couche respective appliquée (4) du matériau à base de fibres-matrice sur la base de couche (3), le corps fibreux présentant une multitude de structures réticulées les unes avec les autres et le matériau à base de fibres-matrice contenant un matériau de matrice (5) et une multitude de fibres courtes (6) et/ou de particules fibreuses.

2. Procédé selon la revendication 1, l'application du matériau à base de fibres-matrice ayant lieu par l'intermédiaire d'une microbuse (7) et/ou le matériau à base de fibres-matrice étant ou comprenant un thermoplastique, en particulier un polymère.

3. Procédé selon la revendication 1 ou 2, l'application du matériau à base de fibres-matrice comprenant un soufflage du matériau de matrice et/ou des fibres courtes (6) ou des particules de fibres sur la base de couche respective.

4. Procédé selon l'une quelconque des revendications précédentes, l'application comprenant un rinçage en surface de la base de couche par le matériau à base de fibres-matrice qui est solidifié localement de manière ciblée.

5. Procédé selon l'une quelconque des revendications précédentes, l'application comprenant un lavage de matière support, en particulier d'au moins une fibre tendue verticalement, par le matériau à base de fibres-matrice.

6. Procédé selon l'une quelconque des revendications précédentes, qui comprend un changement du matériau à base de fibres-matrice pendant l'application en alternance et la fusion de couches.

7. Procédé selon l'une quelconque des revendications précédentes, la fusion comprenant un chauffage par une ou deux sources de chaleur (8) ou plus.

8. Procédé selon l'une quelconque des revendications précédentes, la fusion ayant lieu par de la lumière et/ou un gaz chaud.

9. Procédé selon l'une quelconque des revendications précédentes, la base de couche (3) comprenant un matériau électriquement conducteur et la fusion comprenant le raccordement d'au moins une partie de la base de couche à une source de courant.

10. Procédé selon la revendication 9, l'application du matériau à base de fibres-matrice comprenant une pulvérisation de celui-ci sur la base de couche chauffée par conduction électrique et/ou une immersion d'au moins une partie de la base de couche chauffée par conduction électrique dans le matériau à base de fibres-matrice.

11. Procédé pour la fabrication d'un produit semi-fini à base de fibres-matrice qui comprend la fabrication d'un corps fibreux selon l'une quelconque des revendications précédentes ainsi que l'infiltration du corps fibreux par une matrice thermodurcissable et/ou thermoplastique.

12. Procédé pour la fabrication d'une pièce, qui comprend la fabrication d'un corps fibreux selon l'une quelconque des revendications 1 à 10 ainsi qu'une infiltration du corps fibreux par une matrice thermodurcissable et/ou thermoplastique ainsi qu'un durcissement du corps fibreux infiltré au moyen d'une technique de pressage à chaud et/ou dans une autoclave.

13. Dispositif (100) pour la fabrication d'un corps fibreux (1), qui présente :
- des moyens pour appliquer des couches d'un matériau à base de fibres-matrice, qui contient un matériau de matrice (5) et une multitude de fibres courtes (6) et/ou de particules fibreuses, sur une base de couche respective et
- des moyens pour faire fondre une couche appliquée respective du matériau à base de fibres-matrice sur la base de couche ;
le dispositif étant conçu pour mettre en œuvre un procédé selon l'une quelconque des revendications précédentes.

14. Corps fibreux (1) présentant une multitude de structures réticulées les unes aux autres, le corps fibreux étant fabriqué par couches à partir d'un matériau à base de fibres-matrice (2), qui contient un matériau de matrice (5) et une multitude de fibres courtes (6) et/ou de particules fibreuses.

15. Corps fibreux (1) selon la revendication 14, les fibres courtes (6) présentant une longueur de 0,1 mm à 1 mm.
